# EUROPÄISCHE PATENTSCHRIFT

(11) **EP 3 209 916 B1**
(45) Veröffentlichungstag und Bekanntmachung des Hinweises auf die Patenterteilung: **11.12.2019**
(21) Anmeldenummer: 15780815.5
(22) Anmeldetag: 09.10.2015
(51) Int. Cl.: F16K 31/06

(54) **VENTILDICHTEINRICHTUNG FÜR EIN KIPPANKERVENTIL UND VERFAHREN ZUM HERSTELLEN EINER VENTILDICHTEINRICHTUNG FÜR EIN KIPPANKERVENTIL**
VALVE SEALING DEVICE FOR A TILTING-ARMATURE VALVE AND METHOD FOR PRODUCING A VALVE SEALING DEVICE FOR A TILTING-ARMATURE VALVE
MOYEN D'ÉTANCHÉITÉ DE VANNE À INDUIT BASCULANT ET PROCÉDÉ DE FABRICATION D'UN MOYEN D'ÉTANCHÉITÉ DE VANNE À INDUIT BASCULANT

(30) Priorität: 20.10.2014 DE 102014115207
(43) Veröffentlichungstag der Anmeldung: 30.08.2017
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(86) Internationale Anmeldenummer: PCT/EP2015/073462
(87) Internationale Veröffentlichungsnummer: WO 2016/062564

(56) Entgegenhaltungen:
- EP-A2- 1 860 314
- US-A- 2 203 684
- US-A- 3 683 962
- US-A- 5 603 482
- US-A1- 2008 149 192

## Beschreibung

Die vorliegende Erfindung bezieht sich auf ein Kippankerventil mit einer Ventildichteinrichtung, ein Verfahren zum Herstellen eines Kippankerventils mit einer Ventildichteinrichtung, sowie eine Verwendung eines Kippankerventils für ein Druckregelmodul eines Fahrzeugs.

Ventile weisen Dichtungen auf, um einen Ventilausgang oder einen Ventileingang fluiddicht zu verschließen.

Die Druckschrift US 5 603482 A offenbart eine Magnetspulen-betriebene Ventileinheit. Die Druckschrift EP 1 860314 A2 offenbart ein Gerät für schnelles und genaues Messen von Gas, speizell zum Messen von Bennnstoff einer Verbrennungskraftmaschine.

Die Druckschrift US 2008/149192 A1 offenbart ein Ventil.

Die Druckschrift US 3 683 962 A offenbart eine Ventilkonstruktion.

Die Druckschrift US 2 203 684 A offenbart ein Ventil.

Vor diesem Hintergrund wird eine verbesserte Ventildichteinrichtung für ein Kippankerventil, ein Verfahren zum Herstellen einer Ventildichteinrichtung für ein Kippankerventil sowie eine Verwendung einer Ventildichteinrichtung einem Kippankerventil für ein Druckregelmodul eines Fahrzeugs gemäß den unabhängigen Ansprüchen gelöst. Vorteilhafte Ausgestaltungen ergeben sich aus den jeweiligen Unteransprüchen und der nachfolgenden Beschreibung.

Eine Dichteinrichtung für ein Kippankerventil, kann an einem beweglichen Element des Ventils, wie beispielsweise einem Kippanker angeordnet werden. Eine feste Positionierung der Dichteinrichtung und Koppelung der Dichteinrichtung mit dem beweglichen Element erfolgt über einen Haltekörper der Ventildichteinrichtung. Die Funktionalität des Abdichtens wird von einem Dichtkörper beziehungsweise einer Oberfläche des Dichtkörpers übernommen, wenn der Dichtkörper an einen Ventilsitz bewegt oder an diesen gepresst wird.

Eine Ventildichteinrichtung für ein Kippankerventil umfasst:
einen Dichtkörper, dessen eine erste Oberfläche ausgebildet ist, einen Ventilsitz und/oder eine Öffnung eines Ventils fluiddicht zu verschließen; und
einen Haltekörper, der an der der ersten Oberfläche gegenüberliegenden Oberfläche des Dichtkörpers angeordnet ist und ausgebildet ist, die Ventildichteinrichtung in und/oder an einer Aussparung eines Ventils, insbesondere in einer Aussparung eines Kippankers eines Kippankerventils, zu fixieren, insbesondere wobei der Dichtkörper und/oder der Haltekörper im Wesentlichen eine zylindrische Form aufweist.

Unter einer Ventildichteinrichtung kann ein Dicht- und/oder Dämpferelement für ein Ventil verstanden werden. Unter einem Dichtkörper kann ein plastisch-elastischer Festkörper verstanden werden. Die erste Oberfläche des Dichtkörpers kann plan ausgeformt sein. Auf der der ersten Oberfläche gegenüberliegenden Oberfläche oder Seite kann der Dichtkörper in den Haltekörper übergehen. Eine Außenkontur des Dichtkörpers kann sich dabei von einer Außenkontur des Haltekörpers unterscheiden.

Der Dichtkörper und der Haltekörper werden zumindest teilweise von einer Metallhülle, in Form eines Metallbechers, umfasst. Bei der Metallhülle kann es sich um einen Tiefziehbecher handeln. Die Ventildichteinrichtung kann von einem Blechtiefziehteil beziehungsweise einem Blechbezug umgeben sein, wobei nur die stirnseitige Auflage- bzw. Dichtfläche, das heißt, die erste Oberfläche, frei vom Blechbezug ist. Damit kann eine rationellere und damit preisgünstigere Fertigung mittels Mehrfach-Vulkanisieren erreicht werden. Gleichzeitig kann die Ventildichteinrichtung, insbesondere der Dichtkörper, eine stabile Seitenwand aufweisen, wodurch bei häufiger Ventilbetätigung eine bessere Formstabilität des als Dicht- und Dämpferelements wirkenden Dichtkörpers erreicht werden kann.

Die Ventildichteinrichtung kann einen weiteren Dichtkörper aufweisen, der auf einer dem Dichtkörper gegenüberliegenden Seite des Haltekörpers angeordnet ist. Insbesondere kann der weitere Dichtkörper zumindest teilweise von einer weiteren Metallhülle umfasst werden. Eine Form oder eine Außenkontur des Dichtkörpers und eine Form oder eine Außenkontur des weiteren Dichtkörpers können einander entsprechen. Die weitere Metallhülle kann eine gleiche Form wie die Metallhülle aufweisen.

Der Dichtkörper und der weitere Dichtkörper können jeweils eine im Wesentlichen runde Grundform aufweisen. Der Dichtkörper und der weitere Dichtkörper können versetzt zueinander angeordnet sein. Dabei können der Dichtkörper und der weitere Dichtkörper über den dazwischenliegenden Haltekörper verbunden sein.

Günstig ist es auch, wenn der weitere Dichtkörper zumindest teilweise von einer Metallhülle, insbesondere einem Metallbecher, umfasst wird. Dabei kann zumindest ein mit der den Dichtkörper umfassenden Metallhülle (in Form eines Metallbechers) verbundener Anker und zumindest ein mit der den weiteren Dichtkörper umfassenden weiteren Metallhülle verbundener Anker von dem Haltekörper umschlossen sein. Der mit der Metallhülle verbundene Anker und der mit der weiteren Metallhülle verbundene Anker können jeweils zwei Schenkel aufweisen, die quer zueinander ausgerichtet sind. So kann der Anker L-förmig ausgeformt sein. Dabei kann ein längerer Schenkel des Ankers mit der Metallhülle verbunden sein. Wenn die Metallhülle als ein Metallbecher ausgeformt ist, kann der Anker mit einem Boden des Metallbechers verbunden sein. Dabei kann der Boden ein Loch aufweisen, wobei der Anker an einer Seite des Lochs mit dem Boden des Metallbechers verbunden ist. An einer Metallhülle kann eine Mehrzahl von Ankern ausgebildet sein. Dabei kann der Haltekörper eine längliche Form aufweisen. Vorteilhaft ist das Elastomer des Dichtkörpers und/oder des weiteren Dichtkörpers von einer Blechaußenwand der Art umgeben ist, dass die als erste Oberfläche beziehungsweise weitere erste Oberfläche bezeichnete Auflage- bzw. Dichtfläche frei vom Blechbezug ist, während zumindest die Seitenwände von Blech eingefasst sind, um dem Dichtkörper und/oder dem weiteren Dichtkörper eine trotz häufiger Ventilbetätigung gute Formstabilität des Dichtkörpers und/oder des weiteren Dichtkörpers zu gewährleisten. Der Dichtkörper und der weitere Dichtkörper können auf ihre Funktion in einem Kippankerventil auch als Dicht- und Dämpferelement bezeichnet werden.

Ein Verfahren zum Herstellen einer Ventildichteinrichtung für ein Kippankerventil weist zumindest einen Schritt des Ausformens eines einen Dichtkörpers und eines Haltekörpers auf. Dabei ist eine erste Oberfläche des Dichtkörpers ausgebildet, einen Ventilsitz und/oder eine Öffnung eines Ventils fluiddicht zu verschließen. Dabei ist der Haltekörper an der der ersten Oberfläche gegenüberliegenden Oberfläche des Dichtkörpers angeordnet. Der Haltekörper ist ausgebildet, die Ventildichteinrichtung in und ergänzend oder alternativ an einer Aussparung eines Ventils, insbesondere in einer Aussparung eines Kippankers eines Kippankerventils, zu fixieren, insbesondere wobei der Dichtkörper und/oder der Haltekörper im Wesentlichen eine zylindrische Form aufweist.

Im Schritt des Ausformens können der Dichtkörper und ergänzend oder alternativ der Haltekörper vulkanisiert werden. Dabei kann die Ventildichteinrichtung einstückig ausgeformt oder vulkanisiert werden.

Das Verfahren kann zusätzlich zumindest einen der folgenden Schritte aufweisen:
Bereitstellen eines ersten Blechnutzen und eines zweiten Blechnutzen;
Tiefziehen einer ersten Metallhülle, insbesondere eines ersten Metallbechers, und zumindest einer zweiten Metallhülle, insbesondere eines zweiten Metallbechers, in dem ersten Blechnutzen und einer ersten Metallhülle, insbesondere eines ersten Metallbechers, und zumindest einer zweiten Metallhülle, insbesondere zumindest eines zweiten Metallbechers, in dem zweiten Blechnutzen;
Stanzen eines durch zumindest eine Haltebrücke unterbrochenen ersten Rings um die erste Metallhülle und eines durch zumindest eine Haltebrücke unterbrochenen zweiten Rings um die zumindest zweite Metallhülle jeweils in den beiden Blechnutzen;
Ausrichten des ersten Blechnutzens zu dem zweiten Blechnutzen, wobei die im Schritt des Tiefziehens tiefgezogenen Metallhüllen zueinander weisen; und/oder
Vereinzeln der ersten Ventildichteinrichtung und der zumindest zweiten Ventildichteinrichtung durch ein Brechen der Haltebrücken.

Im Schritt des Ausformens können ein erster Dichtkörper innerhalb der ersten Metallhülle des ersten Blechnutzens und ein weiterer erster Dichtkörper innerhalb der ersten Metallhülle des zweiten Blechnutzens sowie ein erster Haltekörper zwischen der ersten Metallhülle des ersten Blechnutzens und der ersten Metallhülle des zweiten Blechnutzens ausgeformt werden, wobei der erste Haltekörper den ersten Dichtkörper mit dem weiteren ersten Dichtkörper verbindet. Dabei können der erste Dichtkörper, der erste Haltekörper und der weitere erste Dichtkörper eine erste Ventildichteinrichtung bilden. Im Schritt des Ausformens können ein zumindest zweiter Dichtkörper innerhalb der zumindest zweiten Metallhülle des ersten Blechnutzens und ein zumindest weiterer zweiter Dichtkörper innerhalb der zumindest zweiten Metallhülle des zweiten Blechnutzens sowie ein zumindest zweiter Haltekörper zwischen der zumindest zweiten Metallhülle des ersten Blechnutzens und der zumindest weiteren zweiten Metallhülle des zweiten Blechnutzens ausgeformt wird, wobei der zumindest zweite Haltekörper den zumindest zweiten Dichtkörper mit dem zumindest weiteren zweiten Dichtkörper verbindet. Dabei können der zumindest zweite Dichtkörper, der zumindest zweite Haltekörper und der zumindest weitere zweite Dichtkörper zumindest eine zweite Ventildichteinrichtung bilden.

Eine Variante einer hier beschriebenen Ventildichteinrichtung wird in einem Kippankerventil für ein Druckregelmodul eines Fahrzeugs verwendet, wobei das Kippankerventil zumindest ein Spulenelement, einen Anker, eine Feder sowie eine Halbschale umfasst, wobei das Spulenelement mindestens einen Spulenkern und eine radial um den Spulenkern angeordnete Spule umfasst, wobei der Anker an einer Stirnseite des Ankers mittels eines Lagers gelagert ist, wobei der Anker durch ein Aktivieren der Spule von einer ersten Position in eine zweite Position bewegbar ist, wobei die Feder ausgebildet ist, den Anker zu bewegen, wobei ein erster Teilbereich der Feder auf einer dem Spulenelement zugewandten Seite des Ankers angeordnet ist und eine Kraft auf den Anker ausübt, um den Anker in Richtung der ersten Position zu bewegen, und ein zweiter Teilbereich der Feder auf einer dem Spulenelement abgewandten Seite des Ankers angeordnet ist, wobei die Ventildichteinrichtung an der dem Spulenelement abgewandten Seite des Ankers angeordnet ist, und wobei in der Halbschale ein Ventilsitz mit einem Ausgang und ein Eingang für ein Fluid ausgebildet sind, wobei der Ausgang in der ersten Position des Ankers mittels der Ventildichteinrichtung fluiddicht verschließbar ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Querschnittdarstellung von zwei Ventildichteinrichtungen in einem Kippanker gemäß einem Ausführungsbeispiel der vorliegenden Erfindung;
- Fig. 2: eine vereinfachte Darstellung eines Ausschnitts eines Kippankers zur Verwendung mit oder in einem Ausführungsbeispiel der vorliegenden Erfindung;
- Fig. 3: eine schematische Querschnittdarstellung einer Ventildichteinrichtung gemäß einem Ausführungsbeispiel der vorliegenden Erfindung;
- Fig. 4: eine schematische Darstellung in einer Aufsicht eines Blechnutzens zum Herstellen einer Mehrzahl von Ventildichteinrichtungen gemäß einem Ausführungsbeispiel der vorliegenden Erfindung;
- Fig. 5: eine schematische Schnittbilddarstellung eines Blechnutzen zum Herstellen einer Mehrzahl von Ventildichteinrichtungen gemäß einem Ausführungsbeispiel der vorliegenden Erfindung;
- Fig. 6: ein schematisches Schnittbild einer Ventildichteinrichtung gemäß einem Ausführungsbeispiel der vorliegenden Erfindung;
- Fig. 7: eine schematische Darstellung in einer Aufsicht einer Ventildichteinrichtung gemäß einem Ausführungsbeispiel der vorliegenden Erfindung;
- Fig. 8: ein schematisches Schnittbild einer Ventildichteinrichtung angeordnet in einem Kippanker gemäß einem Ausführungsbeispiel der vorliegenden Erfindung;
- Fig. 9: eine schematische Darstellung eines Kippankers mit einer daran angeordneten Ventildichteinrichtung gemäß einem Ausführungsbeispiel der vorliegenden Erfindung;
- Fig. 10: ein schematisches Schnittbild eines Kippankers mit einer daran angeordneten Ventildichteinrichtung gemäß einem Ausführungsbeispiel der vorliegenden Erfindung;
- Fig. 11: eine schematische Schnittbilddarstellung eines Blechnutzens zum Herstellen einer Mehrzahl von Ventildichteinrichtungen gemäß einem Ausführungsbeispiel der vorliegenden Erfindung;
- Fig. 12: eine schematische Darstellung in einer Aufsicht eines Blechnutzen zum Herstellen einer Mehrzahl von Ventildichteinrichtungen gemäß einem Ausführungsbeispiel der vorliegenden Erfindung;
- Fig. 13: ein Ablaufdiagramm eines Verfahrens zum Herstellen einer Ventildichteinrichtung für ein Kippankerventil gemäß einem Ausführungsbeispiel der vorliegenden Erfindung; und
- Fig. 14: eine schematische Darstellung eines Kippankerventils zur Verwendung mit einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

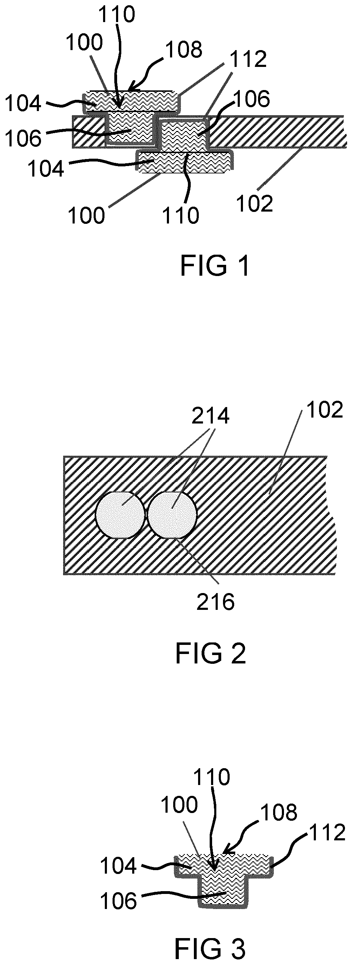

Fig. 1 zeigt eine schematische Darstellung von zwei Ventildichteinrichtungen 100 in einem Kippanker 102 gemäß einem Ausführungsbeispiel der vorliegenden Erfindung. In dem Kippanker 102 sind von zwei sich gegenüberliegenden Seiten jeweils eine Ventildichteinrichtung 100 angeordnet. Die Ventildichteinrichtungen 100 weisen jeweils einen Dichtkörper 104 und einen Haltekörper 106 auf. Eine erste Oberfläche 108 der Ventildichteinrichtung 100 ist ausgebildet, einen Ventilsitz und/oder eine Öffnung eines Ventils fluiddicht zu verschließen. Der Haltekörper 106 ist an der der ersten Oberfläche 108 gegenüberliegenden Oberfläche 110 des Dichtkörpers 104 angeordnet. Der Haltekörper 106 ist ausgebildet, die Ventildichteinrichtung 100 in oder an einer Aussparung des Kippankers 102 zu fixieren. Hierzu weist der Kippanker 102 zwei Aussparungen auf, in denen jeweils ein Haltekörper 106 der zwei Ventildichteinrichtungen 100 angeordnet ist.

Sowohl der Dichtkörper 104 als auch der Haltekörper 106 werden von einer Metallhülle 112 umfasst. In dem in Fig. 1 gezeigten Ausführungsbeispiel ist die Metallhülle 112 als ein tiefgezogener Metallbecher 112 ausgebildet. So sind die Metallbecher 112 in dem in Fig. 1 dargestellten Ausführungsbeispiel mit vulkanisiertem Gummi befüllt.

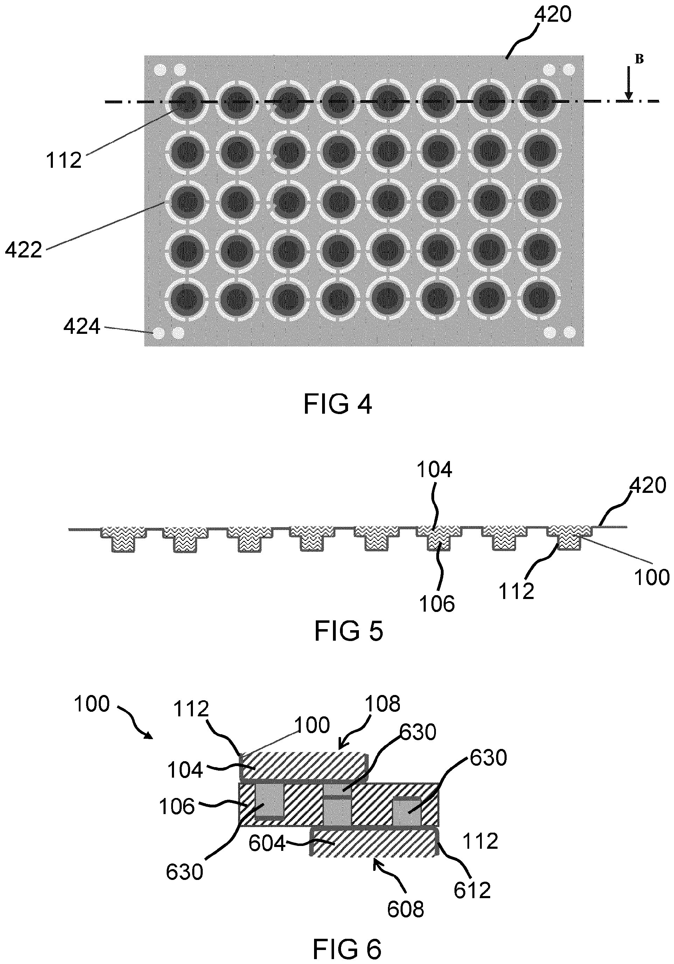

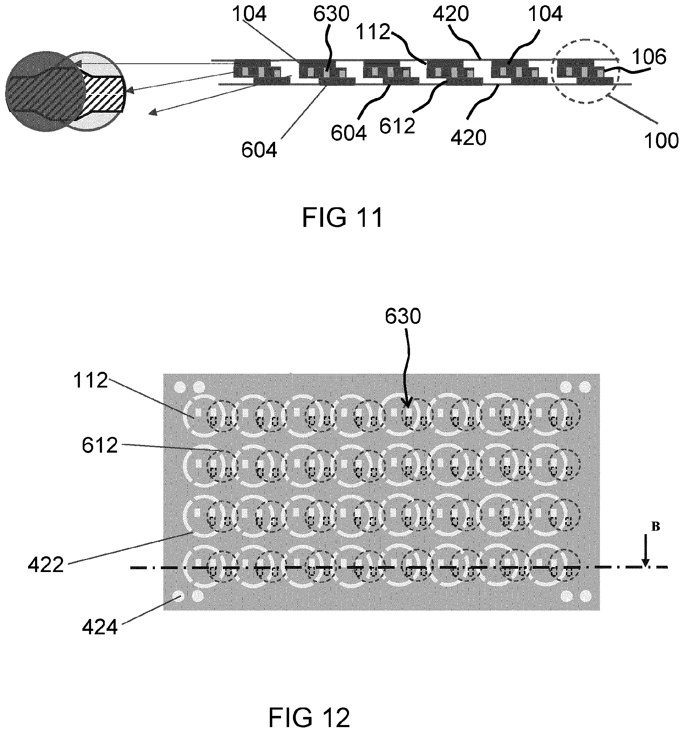

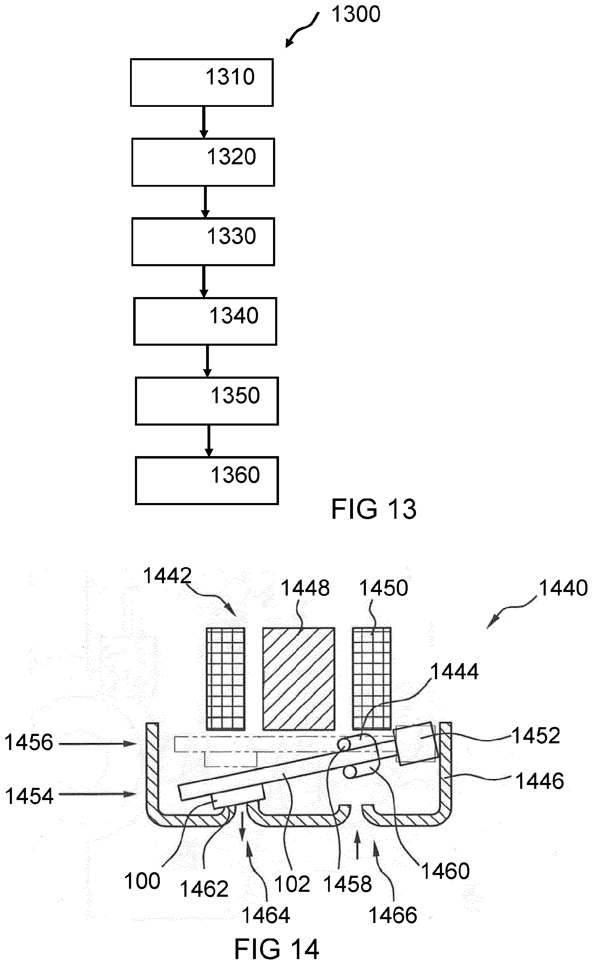

Der Kippanker 102 ist ausgebildet, in einem Kippankerventil, wie dieses in Fig. 14 dargestellt ist, verwendet zu werden. Die beiden mit vulkanisiertem Gummi befüllten Metallbeeher 112 sind einzelnen in die Ankerplatte 102 eingepresst. Dabei können zwei identische Metallbecher 112 für einen Ventilsitz und für einen Dämpfer in dem Kippankerventil verwendet werden. Das in Fig. 13 beschriebene Verfahren zum Herstellen der Ventildichteinrichtungen 100 zeigt, wie gleichzeitig eine große Anzahl von Metallbechern 112 auf einem gemeinsamen Blechnutzen kostengünstig vulkanisiert werden, im Vergleich bzw. anstelle des Vulkanisierens einzelner und vergleichsweise großer Ankerbleche 102. Entsprechende Blechnutzen sind in Fig. 4 und Fig. 12 beschrieben.

In dem in Fig. 1 dargestellten Ausführungsbeispiel weisen sowohl der Dichtkörper 104 als auch der Haltekörper 106 im Wesentlichen eine zylindrische Form auf. Fig. 2 zeigt die genannte Aussparung in dem Kippanker 102, die zumindest eine Teilgerade aufweist, die ausgebildet ist, ein Verdrehen der Ventildichteinrichtung zu verhindern. Dabei wird die Ventildichteinrichtung 100 in der Aussparung verpresst.

Fig. 2 zeigt eine vereinfachte Darstellung eines Ausschnitts eines Kippankers 102 gemäß einem Ausführungsbeispiel der vorliegenden Erfindung. Der Kippanker 102 ist ausgebildet, in einem Kippankerventil als bewegliches Ventilelement verwendet zu werden. Bei dem Kippanker 102 kann es sich um ein Ausführungsbeispiel eines in Fig. 1 gezeigten Kippankers 102 handeln. Der in Fig. 2 gezeigte Kippanker 102 weist eine im Wesentlichen rechteckige Form auf, wobei die Darstellung auf der rechten Seite abgeschnitten ist. In dem Kippanker 102 sind zwei Aussparungen 214 ausgebildet, die entlang der Längserstreckung des Kippankers 102 mit einem dünnen Steg zwischen den beiden Aussparungen 214 direkt nebeneinander angeordnet sind. Parallel zu der Längserstreckung des Kippankers 102 weisen die Aussparungen 214 jeweils zwei Teilbereiche mit einer Teilgeraden 216 auf. So sind die beiden Teilgeraden 216 einer Aussparung 214 auf zwei sich gegenüberliegenden Seiten der Aussparung 214 angeordnet. Die Teilgeraden 216 sind ausgebildet, ein Verdrehen einer in die Aussparung eingepressten Ventildichteinrichtung zu verhindern. Bei den in die Aussparung 214 einpressbaren Ventildichteinrichtungen kann es sich um Ausführungsbeispiele der in Fig. 1 gezeigten Ventildichteinrichtung 100 handeln.

In einem Ausführungsbeispiel ist die Aussparung 214 wie in Fig. 2 gezeigt als ein Durchbruch oder Loch ausgeführt, in einem anderen Ausführungsbeispiel ist die Aussparung 214 wie in Fig. 1 gezeigt als eine Bohrung oder Senke ausgeführt, in die die Ventildichteinrichtung einsetzbar ist.

Fig. 3 zeigt eine schematische Darstellung einer Ventildichteinrichtung 100 gemäß einem Ausführungsbeispiel der vorliegenden Erfindung. Bei der Ventildichteinrichtung 100 kann es sich um eine Variante eines in Fig. 1 gezeigten Ausführungsbeispiels einer Ventildichteinrichtung 100 handeln. Die Ventildichteinrichtung 100 umfasst einen Dichtkörper 104 sowie einen Haltekörper 106 die den Dichtkörper 104 bildende Schicht sowie die den Haltekörper 106 bildende Schicht sind direkt aneinander anliegend angeordnet. Die Ventildichteinrichtung 100 umfasst weiterhin eine Metallhülle 112, die die Ventildichteinrichtung bis auf die erste Oberfläche 108 vollständig umhüllt. Dabei kann die Metallhülle 112 wie in der folgenden Fig Uhr Fig. 4 dargestellt, aus einem Blech, indem die Metallhülle 112 als ein tiefgezogenes Element gefertigt ist, bestehen. Die Metallhülle 112 ist mit einem dauerelastischen Material, welches bei einer mechanischen Beanspruchung wieder in seine Ursprungslage zurückgekehrt und eine hohe Reißfestigkeit aufweist, gefüllt.

Fig. 4 zeigt eine schematische Darstellung in einer Aufsicht einen Blechnutzen 420 zum Herstellen einer Mehrzahl von Ventildichteinrichtungen gemäß einem Ausführungsbeispiel der vorliegenden Erfindung. Bei den Ventildichteinrichtungen kann es sich um Ausführungsbeispiele der in Fig. 1 oder Fig. 3 gezeigten Ventildichteinrichtungen 100 handeln. Der Blechnutzen 420 weist eine rechteckige Form auf. In dem Blechnutzen 420 sind in fünf Reihen jeweils acht Metallbecher 112 für entsprechende Ventildichteinrichtungen angeordnet. Bei den Metallbechern 112 handelt es sich um tiefgezogenen Metallbecher 112, die in ihrer Seitenwand eine Stufe aufweisen, das heißt, in einem ersten Boden des Metallbechers 112 ist ein weiterer Abschnitt, der noch weiter tiefgezogen ist. Die Metallbecher 112 werden jeweils durch vier Haltebrücken 422 in dem Blechnutzen 420 gehalten. Dabei sind die Haltebrücken 422 der Art ausgeformt, dass die Metallbecher 112 einfach vereinzelt werden können. Die Metallbecher 112 werden entsprechend ihrer Herstellungsart auch als Tiefziehbecher 112 bezeichnet.

Um die Übersichtlichkeit zu bewahren, ist sowohl bei den Haltebrücken 422 als auch bei den folgend beschriebenen Zentrierlöchern 424 jeweils nur eine Haltebrücke 422 bzw. ein Zentrierloch 424 jeweils mit einem Bezugszeichen versehen.

An den vier Ecken weist der Blechnutzen 420 jeweils zwei Zentrierlöcher 424 zum präzisen Einlegen des Blechnutzens 420 in eine Spritzgussform auf. Die beiden Zentrierlöeher sind jeweils in der Haupterstreckungsrichtung des Blechnutzens 420 nebeneinander angeordnet.

In Fig. 4 ist weiterhin eine Schnittachse B eingezeichnet, die mittig durch die erste Reihe der Metallbecher 112 verläuft. Ein entsprechendes Schnittbild ist als Seitenansicht in Fig. 5 dargestellt.

Fig. 5 zeigt eine schematische Schnittbilddarstellung eines Blechnutzen 420 zum Herstellen einer Mehrzahl von Ventildichteinrichtungen 100 gemäß einem Ausführungsbeispiel der vorliegenden Erfindung. Bei den Ventildichteinrichtungen 100 kann es sich um Ausführungsbeispiele von in Fig. 1 oder Fig. 3 gezeigten Ventildichteinrichtungen 100 handeln. Bei dem Blechnutzen 420 kann es sich um ein Ausführungsbeispiel eines in Fig. 4 gezeigten Blechnutzens 420 handeln, wobei die Darstellung in Fig. 5 eine Schnittbilddarstellung entlang der Schnittachse B des in Fig. 4 gezeigten Blechnutzens 420 zeigt. In dem Schnittbild sind acht Ventildichteinrichtungen 100 dargestellt. Der Blechnutzen 420 weist in der Schnittbilddarstellung in einer Reihe acht vereinzelbare Metallbecher 112 auf, in denen jeweils ein Dichtkörper 104 und ein Haltekörper 106 vulkanisiert ist. Somit handelt es sich bei den Ventildichteinrichtungen 100 um vulkanisierte fertige Bauteile vor einer Vereinzelung.

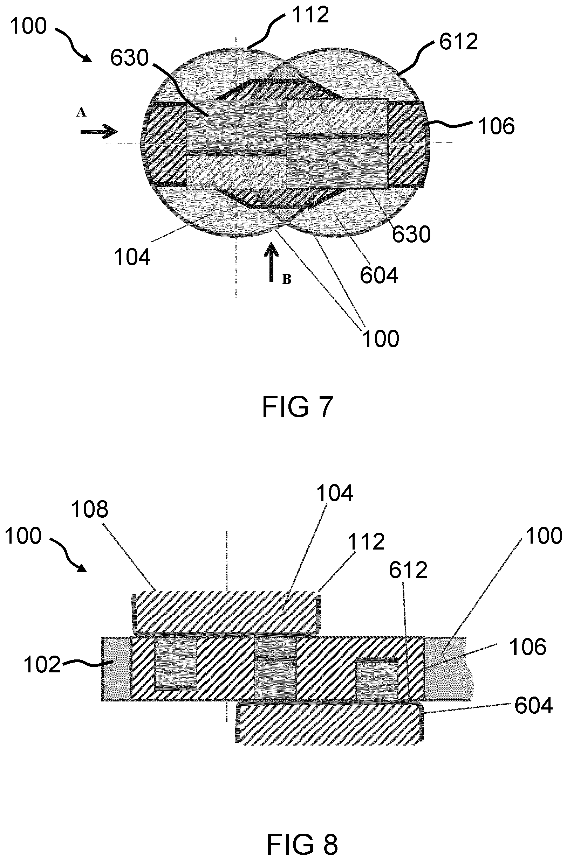

Fig. 6 zeigt ein schematisches Schnittbild einer Ventildichteinrichtung 100 gemäß einem weiteren Ausführungsbeispiel der vorliegenden Erfindung. Bei der Ventildichteinrichtung 100 kann es sich um ein Ausführungsbeispiel einer in Fig. 1, Fig. 3 oder Fig. 5 gezeigten Ventildichteinrichtung 100 handeln. Die in Fig. 6 gezeigte Ventildichteinrichtung 100 weist einen weiteren Dichtkörper 604 auf, der auf einer dem Dichtkörper 104 gegenüberliegenden Seite des Haltekörpers 106 angeordnet ist. Sowohl der Dichtkörper 104 als auch der weitere Dichtkörper 604 sind zumindest teilweise von einer Metallhülle 112, 612 umhüllt. Sowohl die Metallhülle 112 als auch die weitere Metallhülle 612 sind als Metallbecher 112 bzw. weiterer Metallbecher 612 ausgebildet, die bis auf die erste Oberfläche 108 und eine weitere erste Oberfläche 608 den Dichtkörper 104 respektive den weiteren Dichtkörper 604 umhüllen. Der Dichtkörper 104 und der weitere Dichtkörper 604 sind über den Haltekörper 106 miteinander verbunden. Dabei weisen die erste Oberfläche 108 des Dichtkörpers 104 und die weitere erste Oberfläche 608 des weiteren Dichtkörpers 604 in zwei zueinander entgegengesetzte Richtungen. Wie aus der folgenden Figur Fig. 7 ersichtlich, weisen der Dichtkörper 104 und der weitere Dichtkörper 604 jeweils eine im Wesentlichen runde Grundform auf.

In einem Boden des den Dichtkörper 104 umhüllenden Metallbechers 112 sind zwei sogenannte Anker 630 frei gestanzt. Ein Ende der beiden Anker 630 ist jeweils mit dem Metallbecher 112 verbunden. Dabei weist der Anker 630, die insbesondere in Fig. 7 ersichtlich, eine L-Form auf. So ist ein Schenkel der L-Form mit einem Boden des Metallbechers 112 verbunden. Dies gilt analog auch für den weiteren Metallbecher 612.

Der Dichtkörper 104 sowie der weitere Dichtkörper 604 sind versetzt zueinander angeordnet. Dabei sind der Dichtkörper 104 sowie der weitere Dichtkörper 604 der Art zueinander ausgerichtet, dass jeweils ein Anker 630 ineinandergreift bzw. dass zwei korrespondierende Anker 630 ineinandergreifen. Die Anker 630 sind von dem Haltekörper 106 umschlossen.

In den folgenden Figuren Fig. 7 bis Fig. 10 wird das in Fig. 6 dargestellte Ausführungsbeispiel einer Ventildichteinrichtung 100 in verschiedenen Ansichten bzw. Einbausituationen in einem Kippanker dargestellt.

Fig. 7 zeigt eine schematische Darstellung in einer Aufsicht einer Ventildichteinrichtung 100 gemäß einem Ausführungsbeispiel der vorliegenden Erfindung. Bei der Ventildichteinrichtung 100 kann es sich um ein Ausführungsbeispiel einer in Fig. 6 gezeigten Ventildichteinrichtung 100 handeln. Der Dichtkörper 104 sowie der weitere Dichtkörper 604 sind versetzt zueinander angeordnet, wobei ein Teilbereich des Dichtkörpers 104 mit einem Teilbereich des weiteren Dichtkörpers 604 überlappt. Der Dichtkörper 104 sowie der weitere Dichtkörper 604 sind über den Haltekörper 106 miteinander verbunden. Der Dichtkörper 104 wird von einer Metallhülle 112 zumindest teilweise umhüllt. Die Metallhülle 112 ist mit einem Anker 630 verbunden, wobei der Anker 630 in den Haltekörper 106 ragt. Der weitere Dichtkörper 604 wird von einer weiteren Metallhülle 612 zumindest teilweise umhüllt. Die weitere Metallhülle 612 ist mit einem Anker 630 verbunden, wobei der Anker 630 in den Haltekörper 106 ragt.

Der Haltekörper 106 weist eine quaderförmige Grundform auf, deren zwei Stirnseiten jeweils an die Rundung des Dichtkörpers 104 bzw. des weiteren Dichtkörpers 604 angepasst sind. Die zwei in der Aufsicht sichtbaren Seitenflächen des Haltekörpers 106 weisen in einem mittleren Bereich eine Ausbuchtung auf, die ausgebildet sind, die Ventildichteinrichtung 100 in einem entsprechend ausgeformten Kippanker zu fixieren.

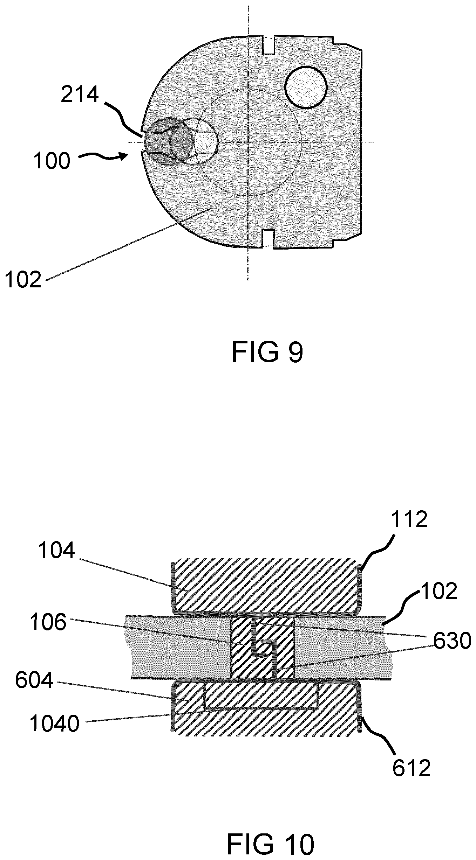

Bei dem in Fig. 7 dargestellten Ausführungsbeispiel kann der Haltekörper 106 auch als Brücke 106 zwischen dem Dichtkörper 104 und dem weiteren Dichtkörper 604 bezeichnet werden. Sowohl der Dichtkörper 104, der weitere Dichtkörper 604 sowie der Haltekörper 104 können im Wesentlichen aus einem dauerelastischen Material wie beispielsweise Gummi oder einer Gummi-artigen Mischung oder Kunststoffmischung gefertigt sein. Der Dichtkörper 104 kann beispielsweise als ein Dämpfergummi in einem Kippankerventil eingesetzt werden. Der weitere Dichtkörper 604 kann beispielsweise als ein Ventilgummi in einem Kippankerventil eingesetzt werden. Ein entsprechender Kippanker ist in Fig. 9 dargestellt. Ein entsprechendes Kippankerventil ist in Fig. 14 dargestellt.

In Fig. 7 sind zwei Pfeile dargestellt, die eine Ansicht A und eine Ansicht B repräsentieren. Eine Ansicht aus der mit A bezeichneten Richtung ist in Fig. 10 dargestellt, eine Ansicht aus der mit B bezeichneten Richtung ist in Fig. 8 dargestellt.

Fig. 8 zeigt ein schematisches Schnittbild einer Ventildichteinrichtung 100 angeordnet in einem Kippanker 102 gemäß einem Ausführungsbeispiel der vorliegenden Erfindung. Die Darstellung der Ventildichteinrichtung 100 entspricht der Darstellung in Fig. 6, mit dem Unterschied, dass die Ventildichteinrichtung 100 in einem Kippanker 102 angeordnet ist. Der Dichtkörper 104 ist auf einer Seite des Kippankers 102 angeordnet, der weitere Dichtkörper 604 ist auf einer zur Anordnung des Dichtkörpers 104 gegenüberliegenden Seite des Kippankers 102 angeordnet. Eine Dicke des Kippankers 102 entspricht einem Abstand zwischen dem Dichtkörper 104 und dem weiteren Dichtkörper 604, der durch den Haltekörper 106 ausgefüllt wird. Die Metallhüllen 112, 612 der beiden Dichtkörper 104, 604 sind im Wesentlichen auf der Oberfläche des Kippankers 102 angeordnet.

Die Darstellung in Fig. 8 kann der in Fig. 7 dargestellten Ventildichteinrichtung 100 in einer Seitenansicht entsprechend einer Seitenansicht aus der mit dem Pfeil B gekennzeichneten Richtung.

Fig. 9 zeigt eine schematische Darstellung eines Kippankers 102 mit einer daran angeordneten Ventildichteinrichtung 100 gemäß einem Ausführungsbeispiel der vorliegenden Erfindung. Bei der Ventildichteinrichtung 100 kann es sich wie bei dem Kippanker 102 um das in Fig. 8 gezeigte Ausführungsbeispiel handeln. Der Kippanker 102 weist eine im Wesentlichen runde Grundform auf, wobei der Kippanker im Bereich des Lagers eine gerade aufweist, die entsprechend einer Tangente an die Grundform ausgerichtet ist. In dem dargestellten Ausführungsbeispiel ist der Kippanker 102 als ein Stanzprägeblech gefertigt. Der Kippanker 102 weist spiegelsymmetrisch zwei Kerben auf, durch die eine spiegelsymmetrische Feder für einen Seitenwechsel führbar ist. Im Bereich des Lagers kann in dem Kippanker eine Lagerhalbschale ausgebildet sein, in der eine Nadelrolle führbar ist, deren Länge weitgehend einem Durchmesser oder einer Erstreckung des Ankers entspricht. Auf der dem Lagerbereich gegenüberliegenden Seite ist in dem Kippanker 102 eine Aussparung 214 angeordnet, in die die Ventildichteinrichtung 100 einsteckbar ist, beziehungsweise in der die Ventildichteinrichtung 100 angeordnet ist.

Die zwei sich gegenüberliegenden Seitenflächen der Aussparung 214 weisen in einem mittleren Bereich eine Ausbuchtung auf, die ausgebildet sind, die Ventildichteinrichtung 100 zu fixieren.

Fig. 10 zeigt ein schematisches Schnittbild eines Kippankers mit einer daran angeordneten Ventildichteinrichtung gemäß einem Ausführungsbeispiel der vorliegenden Erfindung. Bei der Ventildichteinrichtung 100 handelt es sich bei dem in Fig. 10 dargestellten Ausführungsbeispiel um eine Ventildichteinrichtung 100, wie diese in Fig. 7 bis Fig. 9 dargestellt ist, wobei die Ventildichteinrichtung 100 in einer Seitenansicht entsprechend einer Seitenansicht aus der mit dem Pfeil A in Fig. 7 gekennzeichneten Richtung. Die Ventildichteinrichtung 100 ist in einem Kippanker 102 angeordnet. Der Dichtkörper 104 ist auf einer Seite des Kippankers 102 angeordnet, der weitere Dichtkörper 604 ist auf einer zur Anordnung des Dichtkörpers 104 gegenüberliegenden Seite des Kippankers 102 angeordnet. Eine Dicke des Kippankers 102 entspricht einem Abstand zwischen dem Dichtkörper 104 und dem weiteren Dichtkörper 604, der durch den Haltekörper 106 ausgefüllt wird. Die Metallhüllen 112, 612 der beiden Dichtkörper 104, 604 sind im Wesentlichen auf der Oberfläche des Kippankers 102 angeordnet. In einem Boden der beiden Metallhüllen 112, 612 ist jeweils ein L-förmiger Anker 630 ausgebildet, der senkrecht von dem Boden in Richtung des korrespondierenden Dichtkörpers 604, 104 weist, wobei die beiden quer stehenden Schenkel der beiden L-förmigen Anker 630 ineinandergreifen. Dabei sind die Anker 630 in den Haltekörper 106 eingebettet.

Fig. 11 zeigt eine schematische Schnittbilddarstellung eines Blechnutzens 420 zum Herstellen einer Mehrzahl von Ventildichteinrichtungen 100 gemäß einem Ausführungsbeispiel der vorliegenden Erfindung. Bei den Ventildichteinrichtungen kann es sich um ein Ausführungsbeispiel einer in Fig. 6 bis Fig. 10 gezeigten Ventildichteinrichtung 100 handeln. In einem Blechnutzen 420 sind tiefgezogene Metallbecher 112 ausgeformt, wie auch in einem zweiten gleichartigen Blechnutzen 420, in dem tiefgezogene weitere Metallbecher 612 ausgeformt sind und der überkopf platziert unter dem ersten Blechnutzen 420 angeordnet ist. In den Metallbechern 112, 612 ist Gummi aufvulkanisiert als Dämpfergummi oder Ventilgummi für ein Kippankerventil. Allgemeiner formuliert heißt dies, dass die Ventildichteinrichtung 100 zwei Dichtkörper 104, 604 umfasst, die über einen Haltekörper 106 verbunden sind. Dabei sind die Dichtkörper 104, 604 von einem Metallbecher 112, 612 umfasst. Anker 630 verbinden die Metallbecher mit dem Haltekörper 106, sodass ein kompaktes, letztendlich einstückiges Bauteil entsteht.

In der Darstellung in Fig. 11 ist rechts eine Seitenansicht mit sechs Ventildichteinrichtungen 100 in einer Schnittdarstellung dargestellt. Links ist eine Aufsicht auf eine Ventildichteinrichtung 100 dargestellt. Dabei entspricht die Aufsicht weitgehend der Darstellung in Fig. 7, wobei die Darstellung in Fig. 11 etwas weiter vereinfacht ist.

Die Ventildichteinrichtung 100 wird auch als eine vulkanisierte Dichtpilleneinheit bezeichnet. Wie in Fig. 9 ersichtlich sind die Ventildichteinrichtungen 100 ausgebildet, in einen Kippanker seitlich eingesteckt zu werden.

Fig. 12 zeigt eine schematische Darstellung in einer Aufsicht eines Blechnutzens 420 zum Herstellen einer Mehrzahl von Ventildichteinrichtungen gemäß einem Ausführungsbeispiel der vorliegenden Erfindung. Bei den Ventildichteinrichtungen kann es sich um Ausführungsbeispiele der in Fig. 6 bis Fig. 11 gezeigten Ventildichteinrichtungen 100 handeln. Der Blechnutzen 420 weist eine rechteckige Form auf. In dem Blechnutzen 420 sind in vier Reihen jeweils acht Metallbecher 112 für entsprechende Ventildichteinrichtungen angeordnet. Bei den Metallbechern 112 handelt es sich um tiefgezogenen Metallbecher 112. In den Metallbechern 112 sind jeweils zwei Anker 630 ausgestanzt beziehungsweise ausgeformt. Die Metallbecher 112 werden jeweils durch vier Haltebrücken 422 in dem Blechnutzen 420 gehalten. Dabei sind die Haltebrücken 422 der Art ausgeformt, dass die Metallbecher 112 einfach vereinzelt werden können. Die Metallbecher 112 werden entsprechend ihrer Herstellungsart auch als Tiefziehbecher 112 bezeichnet.

An den vier Ecken weist der Blechnutzen 420 jeweils zwei Zentrierlöcher 424 zum präzisen Einlegen des Blechnutzens 420 in eine Spritzgussform auf. Die beiden Zentrierlöcher sind jeweils in der Haupterstreckungsrichtung des Blechnutzens 420 nebeneinander angeordnet.

Um die Übersichtlichkeit zu bewahren, ist sowohl bei den Metallbechern 112, 612,, den Ankern 630, den Haltebrücken 422 als auch bei den Zentrierlöchern 424 jeweils nur je ein Metallbecher 112, 612, ein Anker 630, eine Haltebrücke 422 bzw. ein Zentrierloch 424 mit einem Bezugszeichen versehen.

Gestrichelt ist die Lage von weiteren Metallbechern 612 dargestellt, die in einem weiteren Blechnutzen 420 ausgebildet sind, wobei der weitere Blechnutzen 420 unter dem ersten Blechnutzen überkopf platziert ist. Die beiden Blechnutzen 420 sind gleichartig ausgeformt.

In Fig. 12 ist weiterhin eine Schnittachse B eingezeichnet, die mittig durch die erste Reihe der Metallbecher 112 verläuft. Ein entsprechendes Schnittbild ist als Seitenansicht in Fig. 5 dargestellt.

Fig. 13 zeigt ein Ablaufdiagramm eines Verfahrens 1300 zum Herstellen einer Ventildichteinrichtung für ein Kippankerventil gemäß einem Ausführungsbeispiel der vorliegenden Erfindung. Bei der Ventildichteinrichtung kann es sich um eine in den vorangegangenen Figuren beschriebene Ventildichteinrichtung 100 handeln. Das Verfahren 1300 weist zumindest einen Schritt 1350 des Ausformens auf, wobei in dem Schritt 1350 des Ausformens ein Dichtkörper ausgeformt wird, dessen eine erste Oberfläche ausgebildet ist, einen Ventilsitz und/oder eine Öffnung eines Ventils fluiddicht zu verschließen. Weiterhin wird im Schritt 1350 ein Haltekörper ausgeformt, der an der der ersten Oberfläche gegenüberliegenden Oberfläche des Dichtkörpers angeordnet ist und ausgebildet ist, die Ventildichteinrichtung in und/oder an einer Aussparung eines Ventils, insbesondere in einer Aussparung eines Kippankers eines Kippankerventils, zu fixieren, insbesondere wobei der Dichtkörper und/oder der Haltekörper im Wesentlichen eine zylindrische Form aufweist.

Optional wird im Schritt 1350 des Ausformens der Dichtkörper und/oder der Haltekörper vulkanisiert.

In optionalen Ausführungsbeispielen weist das Verfahren 1300 weitere optionale Schritte auf. Dabei sind nicht zwingend alle hier optional aufgeführten Schritte notwendig, sondern das Verfahren 1300 kann beispielsweise um einen der folgenden Schritte erweitert sein.

In einem optionalen Schritt 1310 des Bereitstellens wird zumindest ein Blechnutzen bereitgestellt. Optional werden in dem Schritt 1310 des Bereitstellens zumindest ein erster Blechnutzen und zumindest ein zweiter Blechnutzen bereitgestellt.

In einem optionalen Schritt 1320 des Tiefziehens wird eine erste Metallhülle, insbesondere ein erster Metallbecher, und zumindest eine zweite Metallhülle, insbesondere ein zweiter Metallbecher, in dem ersten Blechnutzen und eine erste Metallhülle, insbesondere ein erster Metallbecher, und zumindest eine zweite Metallhülle, insbesondere zumindest ein zweiter Metallbecher, in dem zweiten Blechnutzen tiefgezogen.

In einem optionalen Schritt 1330 des Stanzens werden ein durch zumindest eine Haltebrücke unterbrochener erster Ring um die erste Metallhülle und ein durch zumindest eine Haltebrücke unterbrochener zweiter Ring um die zumindest zweite Metallhülle jeweils in den beiden Blechnutzen gestanzt.

In einem optionalen Schritt 1340 des Ausrichtens des ersten Blechnutzens zu dem zweiten Blechnutzen, wobei die im Schritt des Tiefziehens tiefgezogenen Metallhüllen zueinander weisen; und/oder

In einer optionalen Variante des Schritts 1350 des Ausformens werden ein erster Dichtkörper innerhalb der ersten Metallhülle des ersten Blechnutzens und ein weiterer erster Dichtkörper innerhalb der ersten Metallhülle des zweiten Blechnutzens sowie ein erster Haltekörper zwischen der ersten Metallhülle des ersten Blechnutzens und der ersten Metallhülle des zweiten Blechnutzens ausgeformt, wobei der erste Haltekörper den ersten Dichtkörper mit dem weiteren ersten Dichtkörper verbindet, wobei der erste Dichtkörper, der erste Haltekörper und der weitere erste Dichtkörper eine erste Ventildichteinrichtung bilden, und wobei im Schritt des Ausformens ein zumindest zweiter Dichtkörper innerhalb der zumindest zweiten Metallhülle des ersten Blechnutzens und ein zumindest weiterer zweiter Dichtkörper innerhalb der zumindest zweiten Metallhülle des zweiten Blechnutzens sowie ein zumindest zweiter Haltekörper zwischen der zumindest zweiten Metallhülle des ersten Blechnutzens und der zumindest weiteren zweiten Metallhülle des zweiten Blechnutzens ausgeformt wird, wobei der zumindest zweite Haltekörper den zumindest zweiten Dichtkörper mit dem zumindest weiteren zweiten Dichtkörper verbindet, wobei der zumindest zweite Dichtkörper, der zumindest zweite Haltekörper und der zumindest weitere zweite Dichtkörper zumindest eine zweite Ventildichteinrichtung bilden.

In einem optionalen Schritt 1360 des Vereinzelns werden die erste Ventildichteinrichtung und die zumindest zweite Ventildichteinrichtung durch ein Brechen der Haltebrücken vereinzelt.

Unter einer Ventildichteinrichtung kann ein Ventilgummimodul für ein pneumatisches Ventil verstanden werden. Eine Ventildichteinrichtung wird auch als Ventilsitzmodul für ein Kippankerventil bezeichnet.

Fig. 14 zeigt eine schematische Darstellung eines Kippankerventils 1440 gemäß einem Ausführungsbeispiel der vorliegenden Erfindung. Das Kippankerventil 1440 weist ein Spulenelement 1442, einen Anker 102, eine Feder 1444, eine Ventildichteinrichtung 100 sowie eine Halbschale 1446 auf. Dabei umfasst das Spulenelement 1442 zumindest einen Spulenkern 1448 sowie eine radial um den Spulenkern 1448 angeordnete Spule 1450. Eine Stirnseite des Ankers 102 ist mittels eines Lagers 1452 gelagert. Der Anker 102 ist zwischen einer ersten Position 1454 und einer zweiten Position 1456 bewegbar. Dabei ist der Anker 102 ausgebildet, bei einem Aktivieren der Spule 1450 von der ersten Position 1454 in die zweite Position 1456 bewegt zu werden. Bei aktivierter Spule 1450 kann der Anker 102 in der zweiten Position 1456 gehalten werden. Dabei ist die Feder 102 ausgebildet, eine Kraft in Richtung der ersten Position 1454 auf den Anker 102 auszuüben. So kann der Anker 102 bei deaktivierter Spule 1450 in der ersten Position 1454 gehalten werden. Ein erster Teilbereich 1458 der Feder 1444 ist auf einer dem Spulenelement 1442 zugewandten Seite des Ankers 102 angeordnet. Ein zweiter Teilbereich 1460 der Feder 1444 ist auf einer dem Spulenelement 1442 abgewandten Seite des Ankers 102 angeordnet. Auf der dem Spulenelement 1442 abgewandten Seite des Ankers 102 ist weiterhin die Ventildichteinrichtung 100 angeordnet.

In der Halbschale 1446 ist ein Ventilsitz 1462 mit einem Ausgang 1464 und ein Eingang 1466 für ein Fluid ausgebildet. Dabei ist der Ausgang 1464 mittels der Ventildichteinrichtung 100 fluiddicht verschließbar, wenn der Anker 102 in der ersten Position 1454 angeordnet ist.

Die beschriebenen Ausführungsbeispiele sind nur beispielhaft gewählt und können miteinander kombiniert werden.

### Bezugszeichenliste

- 100: Ventildichteinrichtung
- 102: Kippanker, Ankerblech
- 104: Dichtkörper
- 106: Haltekörper
- 108: erste Oberfläche
- 110: gegenüberliegende Oberfläche
- 112: Metallhülle, Metallbecher

- 214: Aussparung
- 216: Teilgerade

- 420: Blechnutzen
- 422: Haltebrücke
- 424: Zentrierloch

- 604: weiterer Dichtkörper
- 608: weitere erste Oberfläche
- 612: weitere Metallhülle, weiterer Metallbecher
- 630: Anker

- 1440: Kippankerventil
- 1442: Spulenelement
- 1444: Feder
- 1446: Halbschale
- 1448: Spulenkern
- 1450: Spule
- 1452: Lager
- 1454: erste Position
- 1456: zweite Position
- 1458: erster Teilbereich
- 1460: zweiter Teilbereich
- 1462: Ventilsitz
- 1464: Ausgang
- 1466: Eingang

## Patentansprüche

1. Kippankerventil (1440) mit einer Ventildichteinrichtung (100), wobei die Ventildichteinrichtung (100) die folgenden Merkmale aufweist:
einen Dichtkörper (104), dessen eine erste Oberfläche (108) ausgebildet ist, einen Ventilsitz (1462) und/oder eine Öffnung (1464, 1466) des Kippankerventils (1440) fluiddicht zu verschließen; und
einen Haltekörper (106), der an der der ersten Oberfläche (108) gegenüberliegenden Oberfläche (110) des Dichtkörpers (104) angeordnet ist und die Ventildichteinrichtung (100) in einer Aussparung eines Kippankers (102) des Kippankerventils (1440) fixiert ist, insbesondere wobei der Dichtkörper (104) und/oder der Haltekörper (106) im Wesentlichen eine zylindrische Form aufweist,
**dadurch gekennzeichnet, dass**
der Dichtkörper (104) und der Haltekörper (106) zumindest teilweise von einem Metallbecher (112) umfasst werden.

2. Kippankerventil (1440) gemäß Anspruch 1, bei dem nur die erste Oberfläche (108) frei von einem Blechbezug ist.

3. Kippankerventil (1440) gemäß einem der vorangegangenen Ansprüche, mit einem weiteren Dichtkörper (604), der auf einer dem Dichtkörper (104) gegenüberliegenden Seite des Haltekörpers (106) angeordnet ist, insbesondere wobei der weitere Dichtkörper (604) zumindest teilweise von einer Metallhülle (612) umfasst wird.

4. Kippankerventil (1440) gemäß Anspruch 3, bei dem der Dichtkörper (104) und der weitere Dichtkörper (604) jeweils eine im Wesentlichen runde Grundform aufweisen und versetzt zueinander angeordnet sind, wobei der Dichtkörper (104) und der weitere Dichtkörper (604) über den dazwischenliegenden Haltekörper (106) verbunden sind.

5. Kippankerventil (1440) gemäß Anspruch 4, bei dem der weitere Dichtkörper (604) zumindest teilweise von einer Metallhülle (612), insbesondere einem Metallbecher (612), umfasst wird, wobei zumindest ein mit dem den Dichtkörper (104) umfassenden Metallbecher (112) verbundener Anker (630) und zumindest ein mit der den weiteren Dichtkörper (604) umfassenden Metallhülle (612) verbundener Anker (630) von dem Haltekörper (106) umschlossen ist.

6. Verfahren (1300) zum Herstellen eines Kippankerventils (1440) mit einer Ventildichteinrichtung (100), wobei das Verfahren (1300) den folgenden Schritt aufweist:
Bereitstellen (1310) eines ersten Blechnutzens (420) und eines zweiten Blechnutzens (420);
Tiefziehen (1320) einer ersten Metallhülle (112), in Form eines ersten Metallbechers (112), und zumindest einer zweiten Metallhülle (112), insbesondere eines zweiten Metallbechers (112), in dem ersten Blechnutzen (420) und einer ersten Metallhülle (612), insbesondere eines ersten Metallbechers (612), und zumindest einer zweiten Metallhülle (612), insbesondere zumindest eines zweiten Metallbechers (612), in dem zweiten Blechnutzen (420);
Ausformen (1350) eines Dichtkörpers (104), dessen eine erste Oberfläche (108) ausgebildet ist, einen Ventilsitz (1462) und/oder eine Öffnung (1464, 1466) eines Kippankerventils (1440) fluiddicht zu verschließen sowie Ausformen eines Haltekörpers (106), der an der der ersten Oberfläche (108) gegenüberliegenden Oberfläche (110) des Dichtkörpers (104) angeordnet ist und die Ventildichteinrichtung (100) in einer Aussparung (214) eines Kippankers (102) des Kippankerventils (1440) fixiert ist, insbesondere wobei der Dichtkörper (104) und/oder der Haltekörper (106) im Wesentlichen eine zylindrische Form aufweist,
wobei im Schritt des Ausformens (1350) das Ausformen derart erfolgt, dass der Dichtkörper (104) und der Haltekörper (106) zumindest teilweise von dem ersten Metallbecher (112) umfasst sind.

7. Verfahren (1300) gemäß Anspruch 6, wobei im Schritt (1350) des Ausformens zumindest der Dichtkörper (104) und/oder der Haltekörper (106) vulkanisiert wird.

8. Verfahren (1300) gemäß einem der Ansprüche 6 bis 7, wobei das Verfahren (1300) zusätzlich zumindest einen der folgenden Schritte aufweist:
Stanzen (1330) eines durch zumindest eine Haltebrücke (422) unterbrochenen ersten Rings, um die erste Metallhülle (112, 612) und eines durch zumindest eine Haltebrücke (422) unterbrochenen zweiten Rings um die zumindest zweite Metallhülle (112, 612) jeweils in den beiden Blechnutzen (420);
Ausrichten (1340) des ersten Blechnutzens (420) zu dem zweiten Blechnutzen (420), wobei die im Schritt (1320) des Tiefziehens tiefgezogenen Metallhüllen (112, 612) zueinander weisen; und/oder
Vereinzeln (1360) der ersten Ventildichteinrichtung (100) und/oder der zumindest zweiten Ventildichteinrichtung (100) durch ein Brechen der Haltebrücken (422).

9. Verfahren (1300) gemäß Anspruch 8, bei dem
im Schritt (1350) des Ausformens ein erster Dichtkörper (104) innerhalb der ersten Metallhülle (112) des ersten Blechnutzens (420) und ein weiterer erster Dichtkörper (604) innerhalb der ersten Metallhülle (612) des zweiten Blechnutzens (420) sowie ein erster Haltekörper (106) zwischen der ersten Metallhülle (112) des ersten Blechnutzens (420) und der ersten Metallhülle (612) des zweiten Blechnutzens (420) ausgeformt wird, wobei der erste Haltekörper (106) den ersten Dichtkörper (104) mit dem weiteren ersten Dichtkörper (604) verbindet, wobei der erste Dichtkörper (104), der erste Haltekörper (106) und der weitere erste Dichtkörper (604) eine erste Ventildichteinrichtung (100) bilden, und wobei
im Schritt (1350) des Ausformens ein zumindest zweiter Dichtkörper (104) innerhalb der zumindest zweiten Metallhülle (112) des ersten Blechnutzens (420) und ein zumindest weiterer zweiter Dichtkörper (604) innerhalb der zumindest zweiten Metallhülle (612) des zweiten Blechnutzens (420) sowie ein zumindest zweiter Haltekörper (106) zwischen der zumindest zweiten Metallhülle (112) des ersten Blechnutzens (420) und der zumindest weiteren zweiten Metallhülle (612) des zweiten Blechnutzens (420) ausgeformt wird, wobei der zumindest zweite Haltekörper (106) den zumindest zweiten Dichtkörper (104) mit dem zumindest weiteren zweiten Dichtkörper (604) verbindet, wobei der zumindest zweite Dichtkörper (104), der zumindest zweite Haltekörper (106) und der zumindest weitere zweite Dichtkörper (604) zumindest eine zweite Ventildichteinrichtung (100) bilden.

10. Verwendung eines Kippankerventils (1440) gemäß einem der Ansprüche 1 bis 5 für ein Druckregelmodul eines Fahrzeugs, wobei das Kippankerventil (1440) zumindest ein Spulenelement (1442), einen Kippanker (102), eine Feder (1444) sowie eine Halbschale (1446) umfasst, wobei das Spulenelement (1442) mindestens einen Spulenkern (1448) und eine radial um den Spulenkern (1448) angeordnete Spule (1450) umfasst, wobei der Kippanker (102) an einer Stirnseite des Kippankers (102) mittels eines Lagers (1452) gelagert ist, wobei der Kippanker (102) durch ein Aktivieren der Spule (1450) von einer ersten Position (1454) in eine zweite Position (1456) bewegbar ist, wobei die Feder (1444) ausgebildet ist, den Kippanker (102) zu bewegen, wobei ein erster Teilbereich (1458) der Feder (1444) auf einer dem Spulenelement (1442) zugewandten Seite des Kippankers (102) angeordnet ist und eine Kraft auf den Kippanker (102) ausübt, um den Kippanker (102) in Richtung der ersten Position (1454) zu bewegen, und ein zweiter Teilbereich (1460) der Feder (1444) auf einer dem Spulenelement (1442) abgewandten Seite des Kippankers (102) angeordnet ist, wobei die Ventildichteinrichtung (100) an der dem Spulenelement (1442) abgewandten Seite des Kippankers (102) angeordnet ist, und wobei in der Halbschale (1446) ein Ventilsitz (1462) mit einem Ausgang (1464) und ein Eingang (1466) für ein Fluid ausgebildet ist, wobei der Ausgang (1464) in der ersten Position (1454) des Kippankers (102) mittels der Ventildichteinrichtung (100) fluiddicht verschließbar ist.

## Claims

1. A tilting armature valve (1440) having a valve sealing device (100), the valve sealing device (100) having the following features:
a sealing body (104) with a first surface (108) designed to close a valve seat (1462) and/or an opening (1464, 1466) of the tilting armature valve (1440) in a fluid-tight manner; and
a retaining body (106) that is arranged on the surface (110) of the sealing body (104) opposite the first surface (108) and secures the valve sealing device (100) in a cut-out in a tilting armature (102) of the tilting armature valve (1440), in particular the sealing body (104) and/or the retaining body (106) being substantially cylindrical in shape,
**characterised in that**
the sealing body (104) and the retaining body (106) are at least partially surrounded by a metal sleeve (112), in particular a metal pot (112).

2. A tilting armature valve (1440) according to claim 1, in which only the first surface (108) is free of a sheet-metal covering.

3. A tilting armature valve (1440) according to any one of the preceding claims, having a further sealing body (604) that is arranged on a side of the retaining body (106) opposite the sealing body (104), in particular the further sealing body (604) being at least partially surrounded by a metal sleeve (612).

4. A tilting armature valve (1440) according to claim 3, in which the sealing body (104) and the further sealing body (604) each have a substantially round basic shape and are arranged offset in relation to one another, the sealing body (104) and the further sealing body (604) being connected by the retaining body located between them.

5. A tilting armature valve (1440) according to claim 4, in which further sealing bodies (604) are at least partially surrounded by a metal sleeve (612), in particular a metal pot (612), at least one armature (630) that is connected to the metal sleeve (112) and surrounds the sealing body (104) and at least one armature (630) that is connected to the metal sleeve (612) and surrounds the further sealing body (604) being enclosed by the retaining body (106).

6. A method (1300) for manufacturing a tilting-armature valve (1440) having a valve sealing device (100), the method (1300) comprising the following steps:
the provision (1310) of a first sheet-metal panel (420) and a second sheet-metal panel (42);
the deep-drawing (1320) of a first metal sleeve (112) in the form of a first metal pot (112) and of at least a second metal sleeve (112), in particular a second metal pot (112), in the first sheet-metal panel (420); and of a first metal sleeve (612), in particular a first metal pot (112), and at least a second metal sleeve (612), in particular at least a second metal pot (612), in the second sheet-metal panel (42);
the forming (1350) of a sealing body (104), a first surface (108) of which is designed to close a valve seat (1462) and/or an opening (1464, 1466) of a tilting armature valve (1440) in a fluid-tight manner; and the forming of a retaining body (106) that is arranged on the surface (110) of the sealing body (104) opposite the first surface (108) and secures the valve sealing device (100) in a cut-out (214) of a tilting armature (102) of the tilting-armature valve (1440), in particular the sealing body (104) and/or the retaining body (106) being substantially cylindrical in shape.
in the forming step (1350) the forming being carried out such that the sealing body (104) and the retaining body (106) are at least partially surrounded by the first metal pot (112).

7. A method (1300) according to claim 6, in the forming step (1350) at least the sealing body (104) and/or the retaining body (106) being vulcanized.

8. A method (1300) according to either of claims 6 to 7, the method (1300) additionally comprising at least one of the following steps:
the punching out (1330) of a first ring, interrupted by at least one retaining bridge (422), around the first metal sleeve (112, 612) and of a second ring, interrupted by at least one retaining bridge (422), around the at least second metal sleeve (112, 612), in each of the two sheet-metal panels (420);
the aligning (1340) of the first sheet-metal panel (420) with the second sheet-metal panel (420), the metal sleeves (112, 612) deep-drawn in the deep drawing step (1320) pointing towards one another; and/or
the singularizing (1360) of the first valve sealing device (100) and/or the at least second valve sealing device (100) by breaking the retaining bridges (422).

9. A method (1300) according to claim 8, in which
in the forming step (1350) a first sealing body (104) is formed within the first metal sleeve (112) of the first sheet-metal panel (420), a further first sealing body (604) is formed within the first metal sleeve (612) of the second sheet-metal panel (420) and a first retaining body (106) is formed between the first metal sleeve (112) of the first sheet-metal panel (420) and the first metal sleeve (612) of the second sheet-metal panel (420), the first retaining body (106) connecting the first sealing body (104) to the further first sealing body (604), the first sealing body (104), the first retaining body (106) and the further first sealing body (604) forming a first valve sealing device (100),
and in which
in the forming step (1350) an at least second sealing body (104) is formed within the at least second metal sleeve (112) of the first sheet-metal panel (420), an at least further second sealing body (604) is formed within the at least second metal sleeve (612) of the second sheet-metal panel (420) and an at least second retaining body (106) is formed between the at least second metal sleeve (112) of the first sheet-metal panel (420) and the at least further second metal sleeve (612) of the second sheet-metal panel (420), the at least second retaining body (106) connecting the at least second sealing body (104) to the at least further second sealing body (604), the at least second sealing body (104), the at least second retaining body (106) and the at least further second sealing body (604) forming at least a second valve sealing device (100).

10. The use of a tilting-armature valve (1440) according to any one of claims 1 to 5 for a pressure regulating module of a vehicle, the tilting-armature valve (1440) comprising at least one coil element (1442), a tilting armature (102), a spring (1444) and a half-shell (1446), the coil element (1442) comprising at least one coil former (1448) and a coil (1450) that is arranged radially around the coil former (1448), the tilting armature (102) being mounted on an end of the tilting armature (102) by means of a bearing (1452), it being possible to move the tilting armature (102) from a first position (1454) into a second position (1456) by activating the coil (1450), the spring (1444) being designed to move the tilting armature (102), a first partial region (1458) of the spring (1444) being arranged on a side of the tilting armature (102) facing the coil element (1442) and applying a force on the tilting armature (102) in order to move the tilting armature (102) in the direction of the first position (1454), and a second partial region (1460) of the spring (1444) being arranged on a side of the tilting armature (102) facing away from the coil element (1442), the valve sealing device (100) being arranged on the side of the tilting armature (102) facing away from the coil element (1442), and a valve seat (1462) with an outlet (1464) and an inlet (1466) for a fluid being formed in the half-shell (1446), it being possible to close the outlet (1464) in a fluid-tight manner by means of the valve sealing device (100) when the tilting armature (102) is in the first position (1454).

## Revendications

1. Vanne (1440) à induit basculant, comprenant un dispositif (100) d'étanchéité de vanne, le dispositif (100) d'étanchéité de vanne ayant les caractéristiques suivantes :
un obturateur (104), dont une première surface (108) est constituée pour fermer d'une manière étanche au fluide un siège (1462) de vanne et/ou une ouverture (1464, 1466) de la vanne (1440) à induit basculant ; et
un corps (106) de maintien, qui est disposé sur la surface (110) opposée à la première surface (108) de l'obturateur (104) et le dispositif (100) d'étanchéité de vanne est immobilisé dans un évidement d'un induit (102) basculant de la vanne (1440) à induit basculant, l'obturateur (104) et/ou le corps (106) de maintien ayant une forme sensiblement cylindrique,
**caractérisée en ce que**
l'obturateur (104) et le corps (106) de maintien sont entourés, au moins en partie, d'un godet (112) métallique.

2. Vanne (1440) à induit basculant suivant la revendication 1, dans laquelle seule la première surface (108) est exempte d'un revêtement de tôle.

3. Vanne (1440) à induit basculant suivant l'une des revendications précédentes, comprenant un autre obturateur (604), qui est disposé d'un côté, opposé à l'obturateur (104), du corps (106) de maintien, dans laquelle, notamment, l'autre obturateur (604) est entouré, au moins en partie, d'une douille (612) métallique.

4. Vanne (1440) à induit basculant suivant la revendication 3, dans laquelle l'obturateur (104) et l'autre obturateur (604) ont chacun une forme de base sensiblement circulaire et sont disposés en étant décalés l'un par rapport à l'autre, l'obturateur (104) et l'autre obturateur (604) étant reliés par le corps (606) de maintien interposé entre eux.

5. Vanne (1440) à induit basculant suivant la revendication 4, dans laquelle l'autre obturateur (604) est entouré, au moins en partie d'une douille (612) métallique, notamment d'un godet (612) métallique, dans laquelle au moins un induit (630), relié au godet (112) métallique entourant l'obturateur (104), et au moins un induit (630), relié à la douille (612) métallique entourant l'autre obturateur (604), est entouré du corps (106) de maintien.

6. Procédé de fabrication d'une vanne (1440) à induit basculant, comprenant un dispositif (100) d'étanchéité de vanne, le procédé (1300) ayant les stades suivants :
on se procure un premier flan (420) de tôle et un deuxième flan (420) de tôle ;
on produit, par emboutissage profond (1320), une première douille (112) métallique sous la forme d'un premier godet (112) métallique et au moins une deuxième douille (112) métallique, notamment un deuxième godet (112) métallique, dans le premier flan (420) de tôle et une première douille (612) métallique, notamment un premier godet (612) métallique, et au moins une deuxième douille (612) métallique, notamment au moins un deuxième godet (612) métallique, dans le deuxième flan (420) de tôle ;
on forme (1350) un obturateur (104), dont une première surface (108) est constituée pour fermer de manière étanche au fluide un siège (1462) de vanne et/ou une ouverture (1464, 1466) d'une vanne (1440) à induit basculant, ainsi que l'on forme un corps (106) de maintien, qui est disposé sur la surface (110), opposée à a première surface (108), de l'obturateur (104), et on immobilise le dispositif (100) d'étanchéité de vanne dans un évidement (214) d'un induit (102) basculant de la vanne (1440) à induit basculant, dans lequel, notamment, l'obturateur (104) et/ou le corps (106) de maintien ont sensiblement une forme cylindrique,
dans lequel
dans le stade de la formation (1350), la formation s'effectue de manière à ce que l'obturateur (104) et le corps (106) de maintien soient entourés, au moins en partie, du premier godet (112) métallique.

7. Procédé (1300) suivant la revendication 6, dans lequel, dans le stade (1350) de la formation, on vulcanise au moins l'obturateur (104) et/ou le corps (106) de maintien.

8. Procédé (1300) suivant l'une des revendications 6 à 7, dans lequel le procédé (1300) comprend, en outre, au moins l'un des stades suivant :
estampage (1330) d'un premier anneau, interrompu par au moins un pontet (422) de maintien, autour de la première douille (112, 612) métallique et d'un deuxième anneau, interrompu par au moins un pontet (422) de maintien, autour de la au moins deuxième douille (112, 612) métallique, respectivement, dans les deux flans (420) de tôle ;
alignement (1340) du premier flan (420) de tôle sur le deuxième flan (420) de tôle, dans lequel, dans le stade (1320) de l'emboutissage profond, les douilles (112, 612) métalliques obtenues par emboutissage profond sont tournées l'une vers l'autre ; et/ou
individualisation (1360) du premier dispositif (100) d'étanchéité de vanne et/ou du au moins deuxième dispositif (100) d'étanchéité de vanne par une rupture des pontets (422) de maintien.

9. Procédé (1300) suivant la revendication 8, dans lequel dans le stade (1350) de formation, on forme un premier obturateur (104) au sein de la première douille (112) métallique du premier flan (420) de tôle et un autre premier obturateur (604) au sein de la première douille (612) métallique du deuxième flan (420) de tôle, ainsi qu'un premier corps (106) de maintien entre la première douille (112) métallique du premier flan (420) de tôle et la première douille (612) métallique du deuxième flan (420) de tôle, le premier corps (106) de maintien reliant le premier obturateur (104) à l'autre premier obturateur (604), le premier obturateur (104), le premier corps (106) de maintien et l'autre premier obturateur (604) formant un premier dispositif (100) d'étanchéité de vanne, et dans lequel
dans le stade (1350) de la formation, on forme un au moins deuxième obturateur (104) au sein de la au moins deuxième douille (112) métallique du premier flan (420) de tôle et au moins un autre deuxième obturateur (604) au sein de la au moins deuxième douille (612) métallique du deuxième flan (420) de tôle, ainsi qu'au moins un deuxième corps (106) de maintien entre la au moins une deuxième douille (112) métallique du premier flan (420) de tôle et la au moins une autre deuxième douille (612) métallique du deuxième flan (420) de tôle, le au moins deuxième corps (106) de maintien reliant le au moins deuxième obturateur (104) à au moins l'autre deuxième obturateur (604), le au moins deuxième obturateur (104), le au moins deuxième corps (106) de maintien et le au moins autre deuxième obturateur (604) formant au moins un deuxième dispositif (100) d'étanchéité de vanne.

10. Utilisation d'une vanne (1440) à induit basculant suivant l'une des revendications 1 à 5, pour un module de réglage de la pression d'un véhicule, la vanne (1440) à induit basculant comprenant au moins un élément (1442) de bobine, un induit (102) basculant, un ressort (1444), ainsi qu'une demi-coquille (1446), l'élément (1442) de bobine comprenant au moins un noyau (1448) de bobine et une bobine (1450) disposée au tour du noyau (1448) de bobine, l'induit (102) basculant étant monté à un côté frontal de l'induit (102) basculant au moyen d'un palier (1452), l'induit (102) basculant pouvant passer par une activation de la bobine (1450) d'une première position (1454) à une deuxième position (1456), le ressort (1444) étant configuré pour déplacer l'induit (102) basculant, une première région (1458) partielle du ressort (1444) étant disposée d'un côté, tourné vers l'élément (1442) de bobine, de l'induit (102) basculant et appliquant une force à l'induit (102) basculant, afin de déplacer l'induit (102) basculant en direction de la première position (1454), et une deuxième région (1460) partielle du ressort (1444) étant disposée d'un côté, loin de l'élément (1442) de bobine, de l'induit (102) basculant, le dispositif (100) d'étanchéité de vanne étant disposé du côté loin de l'élément (1442) de bobine de l'induit (102) basculant, et il est constitué, dans la demi-coquille (1446), un siège (1462) de vanne ayant une sortie (1464) et une entrée (1466) pour un fluide, la sortie (1464) pouvant, dans la première position (1454) de l'induit (102) basculant, être fermée d'une manière étanche au fluide au moyen du dispositif (100) d'étanchéité de vanne.
